# EUROPEAN PATENT SPECIFICATION

(11) **EP 3 966 144 B1**
(45) Date of publication and mention of the grant of the patent: **17.01.2024**
(21) Application number: 20725137.2
(22) Date of filing: 06.05.2020
(51) Int. Cl.: B65H 49/32, B65H 49/28, B63B 35/03, B63B 35/04, H02G 1/10, B65H 75/22, B65H 75/24, B65H 57/18

(54) **MODULAR SPOOL STORAGE DEVICE, MODULAR SUPPORT STRUCTURE AND COMBINATION THEREOF**
MODULARE SPULENSPEICHERVORRICHTUNG, MODULARE TRÄGERSTRUKTUR UND KOMBINATION DAVON
DISPOSITIF DE STOCKAGE DE BOBINE MODULAIRE, STRUCTURE DE SUPPORT MODULAIRE ET COMBINAISON DE CEUX-CI

(30) Priority: 06.05.2019 NL 2023074
(43) Date of publication of application: 16.03.2022
(73) Proprietor: Itrec B.V., 3115 HH Schiedam (NL)
(72) Inventor: NOUWENS, Ronny Lambertus Waltherus, 3115 HH Schiedam (NL); SLOB, Wouter Johannes, 3115 HH Schiedam (NL); VEHMEIJER, Terence Willem August, 3115 HH Schiedam (NL)
(74) Representative: EP&C
(86) International application number: PCT/EP2020/062605
(87) International publication number: WO 2020/225317

(56) References cited:
- EP-A1- 3 260 751
- WO-A1-2018/132000
- WO-A2-2009/129223
- US-A- 3 941 146
- US-A1- 2011 072 874

## Description

The invention relates to a spool storage device for storing a length of line, e.g. cable, rigid or flexible pipeline, umbilicals or the like as a spool, a support structure for such a spool storage device and combinations thereof, wherein in particular, the spool storage device is configured to be supported horizontally to rotate about a substantially vertical rotation axis. The invention further relates to a method for using such spool storage device.

EP3260751 discloses a prior art spool storage device configured to store a length of line.

When a certain length of line, e.g. a cable, rigid or flexible pipeline, umbilicals or the like, is needed at an offshore location, it is common practice to spool the length of line on a reel at an onshore location and to transport the reel including the length of line to the offshore location. After using the length of line, the empty reel needs to be transported back to be filled again at the onshore location.

A disadvantage of this practice is that special - and thus expensive - transport is needed for both the filled and empty reel between the onshore and offshore locations.

A further disadvantage may be that during transport it has to be ensured that the length of line is maintained on the reel, which is usually done by spooling the length of line on the reel with back tension, which back tension also has to be maintained during unwinding thereby complicating the entire winding and unwinding process.

It is therefore an object of the invention to provide an improved reel and method of use.

The object of the invention is achieved by providing a modular spool storage device configured to store a length of line, e.g. cable, rigid or flexible pipeline, umbilicals or the like, having a capacity of at least 10 mt (10 t), preferably at least 25 mt (25 t), more preferably at least 50 mt (50 t), and most preferably at least 100 mt (100 t), which is configurable between an assembled operational configuration and a disassembled transport configuration, wherein in the assembled operational configuration the device includes a ring with a U-shaped cross-section such that an opening of the U-shaped cross-section faces towards a centre of the ring to receive the length of line, wherein the ring comprises multiple ring sections, each ring section comprising an outer side wall and a top wall and a bottom wall extending inwardly from the outer side wall, wherein each ring section has two end faces with the outer side wall, the top wall and the bottom wall extending in between the two end faces, each end face being provided with at least one ring connector allowing the assembly of the ring by interconnection of the ring connectors of the multiple ring sections in circumferential direction from the disassembled transport configuration to the assembled operational configuration, and wherein the dimensions of a ring section fit into or correspond to that of an ISO shipping container so as to be transportable as or by an ISO shipping container.

An advantage of the modular spool storage device according to the invention is that the spool storage device has a disassembled transport configuration in which each ring section is transportable as or by an ISO shipping container and thus no special transport is needed when no length of line is spooled on the spool storage device. Also when the spool storage device is not used at a location, e.g. the onshore location, it can be stored in pieces which provides flexibility and/or efficient use of space.

A further advantage may be that in the assembled operational configuration, the U-shaped cross-section of the ring with the opening of the U-shaped cross-section facing towards the centre allows to receive the length of line at the inside of the outer side wall in between the top wall and the bottom wall so that no back tension is needed to keep the length of line in the spool storage device and thus also no back tension needs to be maintained during unwinding of the length of line.

Yet another advantage of the modular spool storage device may be that the spool storage device can relatively easy be adapted to different lengths of line having different minimal radii of curvature by adjusting the number of ring sections in the ring.

In an embodiment, each ring section is substantially rectangularly shaped, so that the ring sections in the assembled operational configuration form a regular polygon shaped ring. Alternatively, or additionally, the outer side walls of the ring sections in the assembled operational configuration are part of a regular polygon shape seen in plan view.

In an embodiment, each end face comprises a ring connector at or near a free end of the top wall and/or a ring connector at or near a free end of the bottom wall to be interconnected directly with the corresponding ring connectors of an adjacent ring section.

In an embodiment, each end face comprises one or more ring connectors at or near the outer side wall to be interconnected indirectly with the corresponding one or more ring connectors of an adjacent ring section via one or more corresponding spacers.

In an embodiment, the one or more spacers are moveable relative to the ring section between an operational position connecting two ring sections together and a transport position thereby allowing the ring section including spacer to have dimensions to fit into or correspond to that of an ISO shipping container.

In an embodiment, the ring includes at least five ring sections, e.g. six ring sections, preferably at least seven ring sections, e.g. eight ring sections, more preferably at least nine ring sections, e.g. ten ring sections, and most preferably at least eleven ring sections, e.g. twelve ring sections.

In an embodiment, the ring sections have dimensions that fit into or correspond to that of a 20 feet ISO shipping container.

In an embodiment, each ring section includes a first portion with the top wall and a part, e.g. a top part, of the side wall and a second portion with the bottom wall and another part, e.g. a bottom part, of the side wall, wherein the first portion and the second portion have an operational configuration in which they are connected to each other to form the U-shaped cross-section, and a transport configuration in which they are connected to each other to have dimensions that fit into or correspond to that of an ISO shipping container.

An advantage thereof is that the ring section can have larger dimensions in the operational configuration that do not necessarily fit into or correspond to that of an ISO shipping container. This can then be done by putting the ring section into the transport configuration.

In an embodiment, the first and second portion in the transport configuration form a rectangular or square cross-section.

In an embodiment, the first and second portion in the transport configuration are arranged such that the side wall parts are arranged at opposite sides of the cross-section and the top and bottom wall are arranged at opposite sides of the cross-section.

In an embodiment, the first and second portion in the transport configuration are arranged such that a side wall part is arranged opposite the top wall and the other side wall part is arranged opposite the bottom wall.

In an embodiment, the two side wall parts are hingedly connected to each other. Preferably, the two side wall parts can be locked in at least the operational configuration, but alternatively or additionally also in the transport configuration.

In an embodiment, the bottom wall is provided with at least one rail section to engage with a modular support structure. Said at least one rail section may be connected to the bottom wall, preferably in the middle of the ring section.

In an embodiment, two rail sections are provided, one rail section being arranged at a side wall side of the bottom wall, and the other rail section being arranged at a free end side of the bottom wall.

In an embodiment, the assembled operational configuration with the opening of the U-shaped cross-section facing towards a centre of the ring is a first assembled operational configuration, wherein the device is also configurable to a second assembled operational configuration in which the device includes a ring with the opening of the U-shaped cross-section facing away from the centre of the ring to receive the length of line.

The invention further relates to a modular support structure for supporting a spool storage device configured to store a length of line, e.g. a cable, rigid or flexible pipeline, umbilicals or the like, having a capacity of at least 10 mt, preferably at leats 25 mt, more preferably at least 50 mt and most preferably at least 100 mt, wherein the spool storage device includes a ring with a U-shaped cross-section such that an opening of the U-shaped cross-section faces towards a centre of the ring, said support structure being configurable between an assembled operational configuration to support the device in a substantially horizontal orientation and a disassembled transport configuration, wherein in the assembled operational configuration the support structure includes a ring with multiple ring sections, each ring section comprising a frame and at least two rail supports, wherein the frames of each ring section have two outer ends, each outer end being provided with at least one ring connector allowing the assembly of the ring by interconnection of the ring connectors of the multiple ring sections in circumferential direction from the disassembled transport configuration to the assembled operational configuration, and wherein the dimensions of a ring section fit into or correspond to that of an ISO shipping container so as to be transportable as or by an ISO shipping container.

In an embodiment, each ring section comprises a rail section having a radius of curvature corresponding to the ring, wherein the at least two rail supports are configured to support the rail section such that the rail section horizontally seen can only move in a circumferential direction, and wherein the rail sections have an upper surface to support the spool storage device.

Hence, the invention further relates to a modular support structure for supporting a spool storage device configured to store a length of line, e.g. a cable, rigid or flexible pipeline, umbilicals or the like, having a capacity of at least 10 mt, preferably at leats 25 mt, more preferably at least 50 mt and most preferably at least 100 mt, wherein the spool storage device includes a ring with a U-shaped cross-section such that an opening of the U-shaped cross-section faces towards a centre of the ring, said support structure being configurable between an assembled operational configuration to support the device in a substantially horizontal orientation and a disassembled transport configuration, wherein in the assembled operational configuration the support structure includes a ring with multiple ring sections, each ring section comprising a frame, a rail section having a radius of curvature corresponding to the ring and at least two rail supports supporting the rail section such that the rail section horizontally seen can only move in a circumferential direction, wherein the rail sections have an upper surface to support the spool storage device, wherein the frames of each ring section have two outer ends, each outer end being provided with at least one ring connector allowing the assembly of the ring by interconnection of the ring connectors of the multiple ring sections in circumferential direction from the disassembled transport configuration to the assembled operational configuration, and wherein the dimensions of a ring section fit into or correspond to that of an ISO shipping container so as to be transportable as or by an ISO shipping container.

Similar to the spool storage device according to the invention, the fact that the support structure has an assembled operational configuration in which each ring section is transportable as or by an ISO shipping container provides the advantage that no special transport is needed for the support structure.

In an embodiment, each ring section is substantially rectangularly shaped, so that the ring sections in the assembled operational configuration form a regular polygon shaped ring.

In an embodiment, each outer end comprises a ring connector at or near a centre side of the ring section to be interconnected directly with a corresponding ring connector of an adjacent ring section.

In an embodiment, each outer end comprises a ring connector at or near an outer side of the ring section to be interconnected indirectly with a corresponding ring connector of an adjacent ring section via a spacer.

In an embodiment, the spacer is moveable relative to the ring section between an operational position connecting two ring sections together and a transport position thereby allowing the ring section including spacer to have dimensions to fit into or correspond to that of an ISO shipping container.

In an embodiment, the ring includes at least four ring sections, e.g. five ring sections, preferably at least six ring sections, e.g. seven ring sections, more preferably at least eight ring sections, e.g. nine ring sections, and most preferably at least ten ring sections, e.g. eleven ring sections.

In an embodiment, the ring sections have dimensions that fit into or correspond to that of a 40 feet ISO shipping container.

In an embodiment, the support structure is provided with a drive to drive rotation of the rail sections in the assembled operational configuration about the centre of the ring.

In an embodiment, the drive is integral with one or more of the rail supports.

In an embodiment, the support structure includes a guide to guide a line from inside the ring to outside the ring in the assembled operational configuration.

In an embodiment, the guide is arranged between the frame and rail section of a ring section.

In an embodiment, the ring sections have dimensions that fit into or correspond to that of a 20 feet ISO shipping container.

In an embodiment, one ring connector is provided at each outer end of the frame of a ring section, said one ring connector being arranged at one side of the outer end, said side being an outer side of the ring section in the assembled operational configuration.

In an embodiment, the assembled operational configuration with the ring connector being arranged at an outer side of the ring section is a first assembled operational configuration, and wherein the support structure has a second assembled operational configuration with the ring connector being arranged at an inner side of the ring section resulting in a larger diameter of the ring than in the first assembled operational configuration.

In an embodiment, one of the at least two rail supports is arranged in a centre of the frame at an inner side thereof, and wherein another one of the at least two rail supports is arranged in a centre of the frame at an outer side thereof.

The invention also relates to a combination of a modular spool storage device according to the invention, a modular support structure according to the invention, and a plurality of rail sections in between the modular spool storage device and modular support structure, said rail sections having a radius of curvature corresponding to the ring of the modular support structure, wherein the at least two rail supports of the ring sections of the modular support structure are configured to support the rail sections such that the rail sections horizontally seen can only move in a circumferential direction, and wherein the rail sections have an upper surface to support the modular spool storage device.

In an embodiment, a radius of curvature of the rail sections is in between a minimal radius of curvature of the ring of the spool storage device and a maximum radius of curvature of the ring of the spool storage device.

In an embodiment, the modular spool storage device has a first and second assembled operational configuration as described above, and the modular support structure has a first and second assembled operational configuration as described above, and wherein both the modular spool storage device and modular support structure are in their respective first assembled operational configurations.

In an embodiment, the modular spool storage device has a first and second assembled operational configuration as described above, and the modular support structure has a first and second assembled operational configuration as described above, and wherein both the modular spool storage device and modular support structure are in their respective second assembled operational configurations.

In an embodiment, the combination further includes one or more spooling devices to unwound a length of line from the modular spool storage device.

In an embodiment, the one or more spooling device include a guide member that can be set at different height levels to guide a line portion.

In an embodiment, when both the modular spool storage device and modular support structure are in their respective first assembled operational configurations, the one or more spooling devices are arranged inside the rings of the modular spool storage device and the modular support structure.

In an embodiment, when both the modular spool storage device and modular support structure are in their respective second assembled operational configurations, the one or more spooling devices are arranged outside rings of the modular spool storage device and the modular support structure.

The disclosure yet also relates to a method for using a modular spool storage device according to the invention, said method comprising the following steps:
a) providing the spool storage device in the assembled operational configuration;
b) spooling a length of line in the spool storage device;
c) transporting the spool storage device including length of line to another location;
d) unwinding the length of line from the spool storage device;
e) disassembling the spool storage device from the assembled operational configuration to the disassembled transport configuration; and
f) transporting the ring sections as and/or by ISO shipping container.

The invention also relates to a method for using a modular spool storage device according to the invention, said method comprising the following steps:
a) transporting the ring sections of the spool storage device in the disassembled transport configuration as and/or by ISO shipping container to a location;
b) assembling the spool storage device from the disassembled transport configuration to the assembled operational configuration;
c) spooling a length of line in the spool storage device; and
d) transporting the spool storage device including length of line to another location.

The disclosure further relates to a method for using a modular support structure according to the invention, said method comprising the following steps:
a) transporting the ring sections as and/or by ISO shipping container to a location;
b) assembling the support structure from the disassembled transport configuration to the assembled operational configuration;
c) supporting a spool storage device with the support structure;
d) disassembling the support structure from the assembled operational configuration to the disassembled transport configuration; and
e) transporting the ring sections as and/or by ISO shipping container from the location.

The invention will now be described in a non-limiting way by reference to the accompanying drawings in which like parts are indicated using like reference symbols, and in which:
- Fig. 1: schematically depicts a combination of a modular spool storage device according to an embodiment of the invention supported by a modular support structure according to an embodiment of the invention;
- Fig. 2: schematically depicts the modular support structure of Fig. 1 in isolation;
- Fig. 3: schematically depicts the modular spool storage device of Fig. 1 suspended from support lines;
- Fig. 4: schematically depicts a ring section of the modular support structure of Fig. 1;
- Fig. 5: schematically depicts a ring section of the modular spool storage device of Fig. 1;
- Fig. 6: schematically depicts a rail support of the ring section of the modular support structure of Fig. 1;
- Fig. 7: schematically depicts a ring section of a modular spool storage device according to another embodiment of the invention, wherein the ring section is in an operational configuration;
- Fig. 8: schematically depicts the ring section of Fig. 7 in a transport configuration;
- Fig. 9: schematically depicts a modular spool storage device according to an embodiment of the invention formed by a plurality of ring sections according to Fig. 7;
- Fig. 10: schematically depicts a modular support structure according to another embodiment of the invention;
- Fig. 11: schematically depicts a ring section of the modular support structure of Fig. 10;
- Fig. 12: schematically depicts a combination of the modular spool storage device of Fig. 9 and the modular support structure of Fig. 10 according to a first assembled configuration; and
- Fig. 13: schematically depicts the combination of Fig. 12 according to a second assembled configuration.

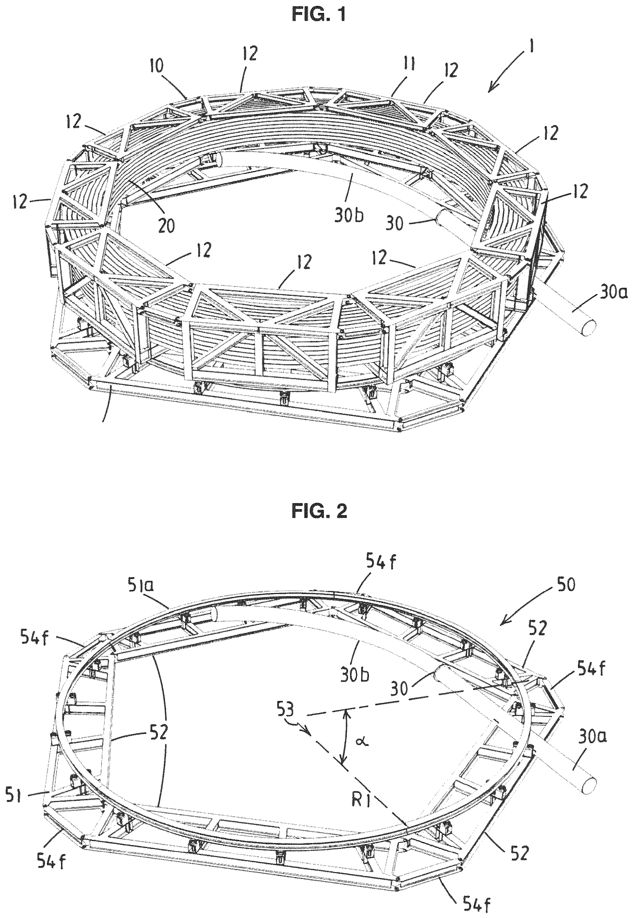

Fig. 1 schematically depicts a spool system 1 which is a combination of a modular spool storage device 10 according to an embodiment of the invention and a modular support structure 50 according to an embodiment of the invention.

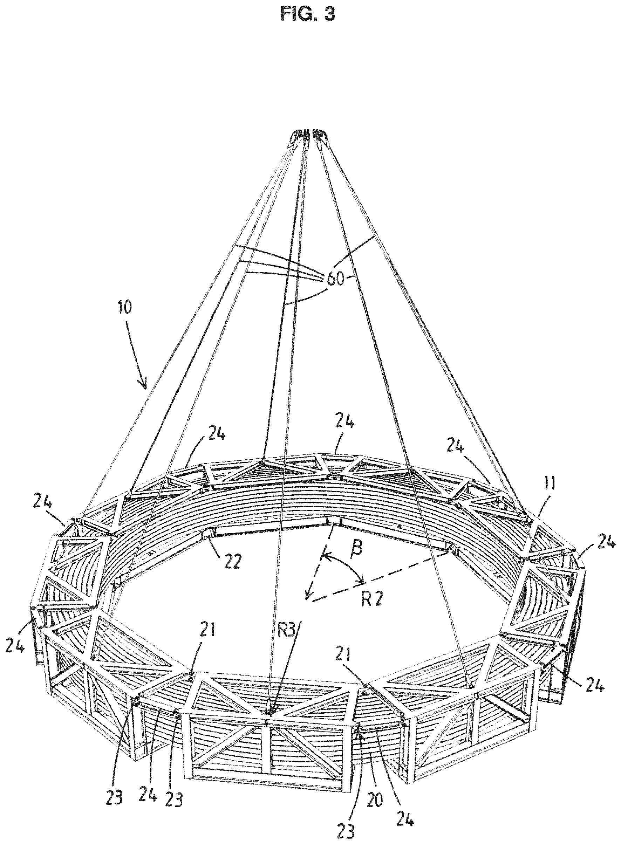

Fig. 2 schematically depicts the modular support structure 50 of Fig.1 in isolation. Fig. 3 schematically depicts the modular spool storage device of Fig. 1 in isolation while being suspended from a plurality of support lines 60 that for instance are connected to a load connector of a hoisting system of a crane to position the spool storage device 10 on or remove said spool storage device 10 from the support structure 50.

The modular support structure 50 is configurable between an assembled operational configuration as depicted in Fig. 1 and 2, and a disassembled transport configuration. In the assembled operational configuration, the support structure includes a ring 51 with multiple, in this case five, ring sections 52. Although not necessary per se, the ring sections 52 are all substantially identical, so that when assembling the ring 51 it doesn't matter which ring section is where in the ring 51.

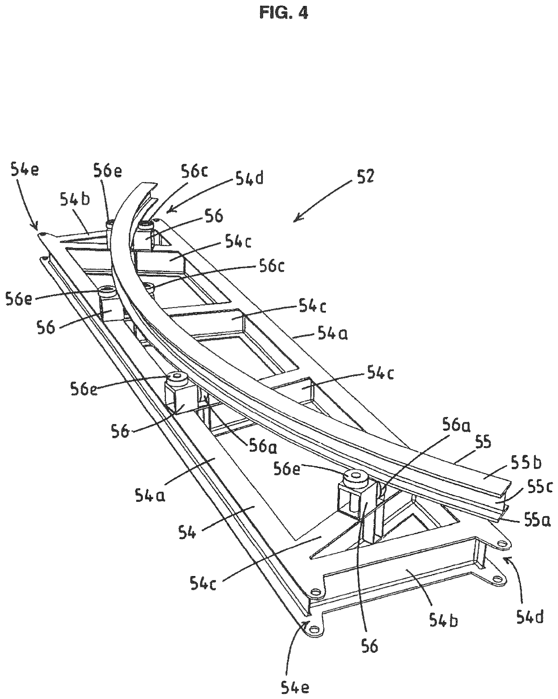

Fig. 4 schematically depicts one of the ring sections 52 in more detail. The ring section 52 includes a frame 54, a rail section 55, and at least two, in this embodiment four, supports 56 to moveably support the rail section 55 from the frame 54.

The frame 54 in this embodiment is substantially rectangular in shape, seen in plan view, comprising two frame members 54a extending in a longitudinal direction of the frame, and six frame members 54b, 54c between the two frame members 54a. All six frame members 54b, 54c provide rigidity to the frame 54, but the frame members 54b are arranged at the two outer ends of the frame and the frame members 54c are arranged in between the two outer ends and each carry a support 56. Preferably, the frame members 54c have an orientation towards a centre 53 (see Fig. 2) of the ring 51.

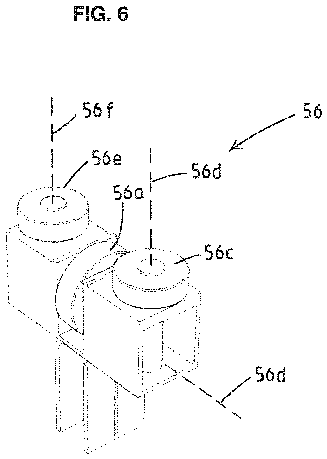

Fig. 6 schematically depicts a support 56 in more detail. The support 56 includes three rollers, namely a first roller 56a, a second roller 56c and a third roller 56e. The first roller 56a is rotatable about a substantially horizontal rotation axis 56b and configured to engage with an underside of the lower flange 55a of the rail section 55. The second roller 56c is rotatable about a substantially vertical rotation axis 56d and configured to engage with an inside wall of the lower flange 55a of the rail section 55. The third roller 56e is rotatable about a substantially vertical rotation axis 56f and configured to engage with an outside wall of the lower flange 55a of the rail section 55. As a result thereof, the support 56 supports and limits the movement of the rail section 55 such that horizontally seen, the rail section 55 can only move in a circumferential direction of the ring 51.

As can be clearly seen in Fig. 2, in the assembled operational configuration, the rail sections 55 of the ring sections 52 together form a circular rail 51a, while the frames 54 form a regular polygon. Due to the ring 51 being formed by five ring sections 52, each rail section 55 spans an angle α = 72 degrees of the circular rail 51a as shown in Fig. 2 and has a radius of curvature R1 over its entire length.

In an embodiment, all rollers 56a, 56c, 56e of the supports 56 are passive elements that are rotatable due to frictional engagement with the rail sections 55, and a separate drive (not shown) is provided to engage with the rail 51a to rotate the rail about the centre 53 thereby also rotating the spool storage device 10 when supported on an upper surface of the upper flange 55b of the rail sections 55 of the support structure 50. However, alternatively, or additionally, one or more of the supports 56 may include a drive to rotate one or more of the rollers 56a, 56c, 56e thereby rotating the rail 51 due to frictional engagement between the rail sections 55 and the one or more rollers 56a, 56c, 56e. Preferably, the drive, whether provided separately or integrated in one or more of the supports, stays on the ring section 52 in the disassembled transport configuration and provides sufficient resistance when turned off to hold the rail section still relative to the frame 54 for transport purposes.

At the two outer ends of the frame 54, the frame 54 is provided with an inner ring connector 54d and an outer ring connector 54e. When assembling the ring 51, each inner ring connector 54d of a ring section 52 is interconnected to the inner ring connector 54d of an adjacent ring section 52, and each outer ring connector 54e of a ring section 52 is interconnected to the outer ring connector 54e of an adjacent ring section 52 using a spacer 54f as shown in Fig. 2.

The modular spool storage device 10 is configured to store a length of line, e.g. cable, rigid or flexible pipeline, umbilicals or the like, as a spool 20 as shown in Fig. 1 and 3. The spool storage device 10 is configurable between an assembled operational configuration, as shown in Figs. 1 and 3, and a disassembled transport configuration.

In the assembled operational configuration, the spool storage device 10 includes a ring 11 with multiple, in this case nine, ring sections 12. Although not necessary per se, the ring sections 12 are all substantially identical, so that when assembling the ring 11 it doesn't matter which ring section is where in the ring 11.

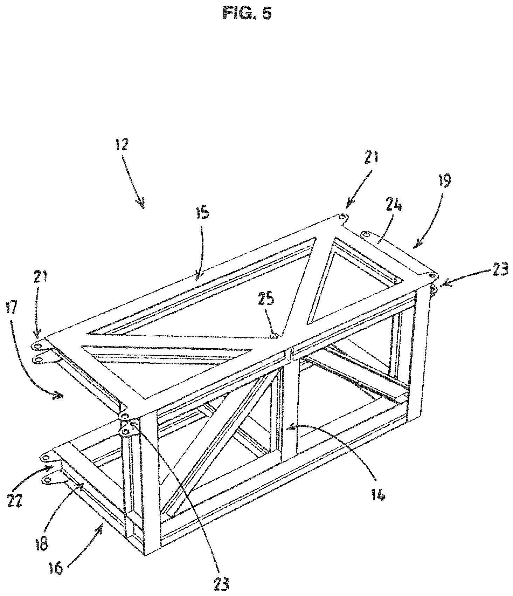

Fig. 5 schematically depicts one or the ring sections 12 in more detail. The ring section 12 has a U-shaped cross-section formed by an outer side wall 14, a top wall 15 and a bottom wall 16, wherein the top wall 15 and the bottom wall 16 extend inwards from the outer side wall 14 such that an opening 17 of the U-shaped cross-section faces towards a centre 13 of the ring 11 in the assembled operational configuration to receive the length of line 20.

The ring section 12 further defines two end faces 18, 19 with the outer side wall 14, the top wall 15 and the bottom wall 16 extending between the two end faces 18, 19.

The end face 18 and the end face 19 each include an upper inner ring connector 21, a lower inner ring connector 22 and an outer ring connector 23. When assembling the ring 11, each upper inner ring connector 21 of a ring section 12 is interconnected to the upper inner ring connector 21 of an adjacent ring section 12, each lower inner ring 22 of a ring section 12 is interconnected to the lower inner ring connector 22 of an adjacent ring section 12, and each outer ring connector 23 of a ring section 12 is interconnected to the outer ring connector 23 of an adjacent ring section 12 using a spacer 24 as shown in Fig. 3.

As can be clearly seen in Fig. 3, in the assembled operational configuration, the frames 12 form a regular polygon. Due to the ring 11 being formed by nine sections 12, each ring section 12 spans an angle β = 40 degrees of the ring 11. The ring 11 can be supported by the rail 51a of the support structure 50 of Fig. 2 as long as distance R2 between centre 13 and the lower inner ring connectors 22 is equal to or smaller than the radius R1 of the rail 51 and as long as the radius R1 is equal to or smaller than a distance R3 between the centre 13 and the outer side wall 14. This means that although in the shown examples, the support structure 50 is used in combination with a spool storage device 10 having nine ring sections 12, it is well possible that a ring 11 made of a different number of ring sections, e.g. eight or ten ring sections 12, possibly even seven or eleven ring sections also can be used with the support structure. In that case, it may be that different spacers 24 need to be used to adjust to the new number of ring sections used to assemble the ring 11, but would provide the advantage that the same ring sections can be used to form different sized rings which may be useful when different lines are to be spooled in the ring 11 having different minimal radius of curvatures.

Shown in Fig. 5 is that the top wall 15 includes an attachment eye 25 allowing the lines 60 to be connected to a ring section 12 to lift the ring 11.

Referring back to Figs. 1 and 2, the fact that the spool 20 is arranged on the inside of the outer side wall 14 between the top wall 15 and the bottom wall 16 has the advantage that no back tension is required to keep the spool 20 in the spool storage device 10. However, this means that the length of line can only be unwound via the openings 17 at the inner side of the ring 11. To guide the unwinding of the length of line, a guide 30 may be provided to guide the line from the inside of the ring 11 to the outside of ring 11. As an example in Figs. 1 and 2, the guide 30 is embodied as a tube having a fixed part 30a that is connected to one of the frames 54 of a ring section of the support structure below the rail, and a moveable part 30b that is connected to the fixed part 30a and able to rotate relative to the fixed part 30a about a longitudinal axis of the fixed part 30a to adjust its position to the location where the line leaves the ring 11 during unwinding. Instead of a tube, it is also envisaged that the guide is embodied as a plurality of rollers, a gutter, a chute or a plurality of guiding rings.

All ring sections 12, 52 have dimensions that fit into or correspond to that of an ISO shipping container so as to be transportable as or by an ISO shipping container. Hence, when for instance a length of line is needed at an offshore location, it is possible to transport the ring sections 52 as and/or by ISO shipping container to the offshore location and assemble the support structure there from the disassembled transport configuration to the assembled operation configuration as depicted in Fig. 2.

A filled spool storage device may be prepared at another location, e.g. an onshore location by providing the spool storage device in the assembled operational configuration and spooling a length of line in the spool storage device. The spool storage device can then be transported to the offshore location, e.g. using the lines 60 when hoisting the spool storage device, to be supported by the support structure. After unwinding the length of line from the spool storage device, the spool storage device can be disassembled from the assembled operational configuration to the disassembled transport configuration after which the ring sections 12 can be transported back to the onshore location as and/or by ISO shipping container.

The spacers 24 of the spool storage device may be disconnected and transported separately, but may also be rotated to be parallel to the corresponding end face as shown in Fig. 5 to be arranged within the contours of the ring section 12. The same may apply to the spacers 54f of the support structure.

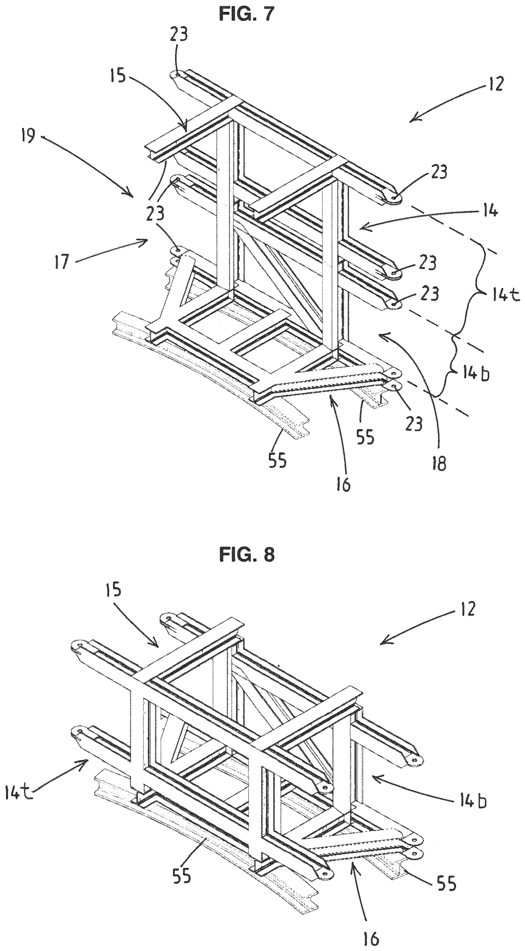

Fig. 7 schematically depicts a ring section 12 of a modular spool storage device according to another embodiment of the invention. In an operational configuration of the ring section 12, the ring section 12 has a U-shaped cross-section formed by an outer wall 14, a top wall 15 and a bottom wall 16, wherein the top wall 15 and the bottom wall 16 extend in the same direction from the outer side wall 14 such that an opening 17 is formed to receive a length of line, e.g. cable, rigid or flexible pipeline, or umbilicals or the like.

The ring section 12 further defines two end faces 18, 19 with the outer side wall 14, the top wall 15 and the bottom wall 16 extending between the two end faces 18, 19.

The end face 18 and the end face 19 each include a plurality of ring connectors 23 allowing assembly of a ring by interconnection of the respective ring connectors 23 of a plurality of ring sections in circumferential direction. Hence, each ring connector 23 of a ring section 12 is connected to a respective ring connector 23 of an adjacent ring section 12.

The ring section 12 of the embodiment of Fig. 7 has two portions that are connectable to each other. A first portion includes the top wall 15 and an upper portion 14t of the side wall 14. The second portion includes a lower portion 14b of the side wall 14 and the bottom wall 16. Both the first and second portions thus have an L-shaped cross-section. When the lower portion 14b and the upper portion 14t are connected to each other as shown in Fig. 7 they form an U-shaped cross-section that can be used to receive a length of line. This configuration will be referred to as the operational configuration of the ring section 12. The first and second portion can also be arranged such that they form a rectangular or square shaped cross-section. This is shown in Fig. 8. The configuration in Fig. 8 will be referred to as the transport configuration.

An advantage of having an operational and transport configuration of the ring section 12 is that the dimensions can be different. In the transport configuration, the dimensions of the ring section fit into or correspond to that of an ISO shipping container so as to be transportable as or by an ISO shipping container. In the operational configuration, these dimensions do not necessarily need to fit into or correspond to that of an ISO shipping container, so that the dimensions may be increased, e.g. as in the embodiment of Fig. 7 and 8 where the height of the ring section 12 in the operational configuration is substantially twice that of the height of the ring section 12 in the transport configuration allowing to receive substantially twice as much length of line while keeping the advantage of the transportability and modularity.

In this embodiment, a ring section 12 includes at least one rail section 55, in this embodiment two rail sections 55. The two rail sections 55 are both connected to the bottom side 16 and are configured to engage with a modular support structure to guide motion of the ring section 12.

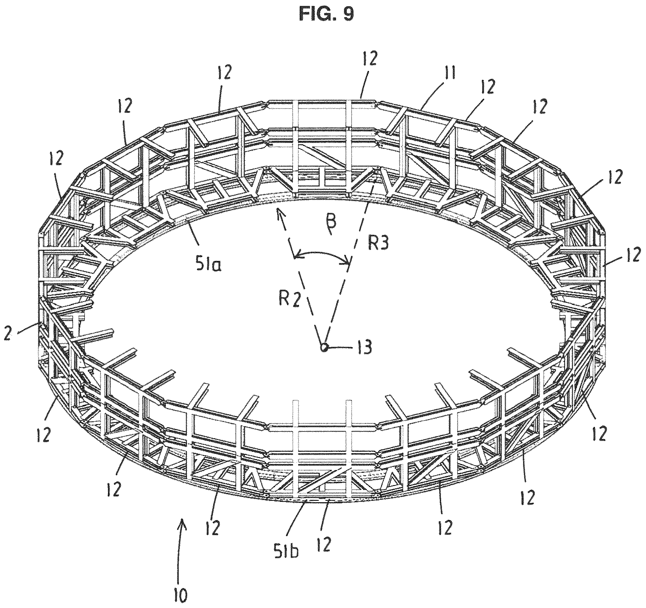

Fig. 9 depicts a modular spool storage device 10 according to an embodiment of the invention that is configured to store a length of line, e.g. cable, rigid or flexible pipeline, umbilicals or the like, having a capacity of at least 10 mt, which is configurable between an assembled operational configuration as shown in Fig. 9 and a disassembled transport configuration.

In the assembled operational configuration, the device 1 includes a ring 11 formed by multiple ring sections 12, in this embodiment ring sections 12 as shown in Fig. 7. In this embodiment, the ring 11 includes 16 ring sections 12, but due to the fact that a length of the free ends of the top and bottom walls 15, 16 is smaller than a length of the sidewall 14, different rings 11 having a different number of ring sections 12 can be formed.

The ring sections 12 in top view form a regular polygon with each ring section 12 spanning an angle β = 22,5 degrees of the ring 11 about a centre 13 and defining an inscribed circle having radius R2 and defining an circumscribed circle having radius R3.

The rail sections 55 form an inner rail ring 51a and an outer rail ring 51b. Preferably, the rail sections 55 engage each other in the assembled operational configuration aiding in maintaining a circular shape of the ring 11 during use.

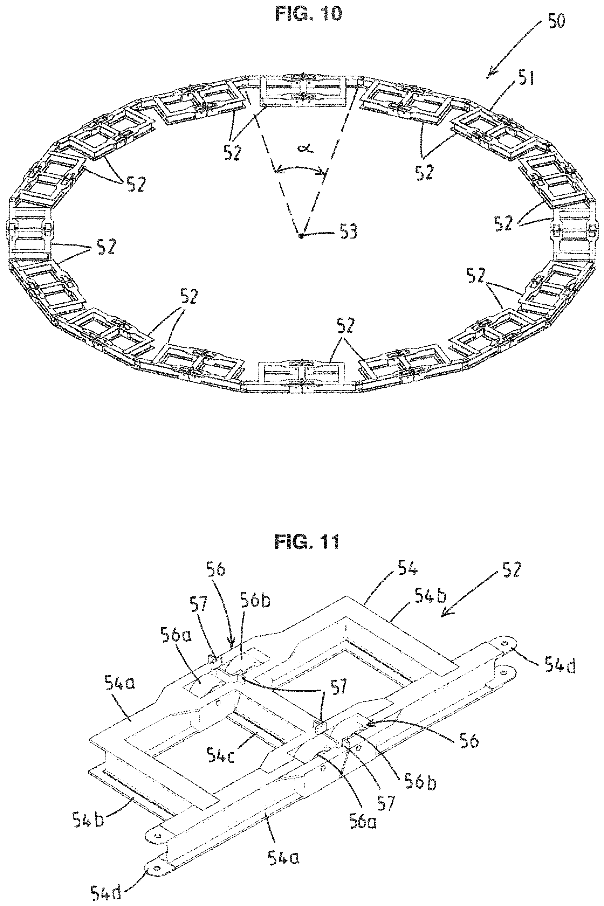

Fig. 10 schematically depicts a modular support structure 50 according to another embodiment of the invention. The modular support structure 50 is configurable between an assembled operational configuration as depicted in Fig. 10 and a disassembled transport configuration. In the assembled operational configuration, the support structure includes a ring 51 with multiple, in this case 16, ring sections 52.

Fig. 11 schematically depicts one of the ring sections 52 in more detail. The ring section 52 includes a frame 54 and at least two, in this embodiment exactly two supports 56 to moveably support a rail section 55 of a modular spool storage device e.g. the modular spool storage device 10 of Fig. 9.

The frame 54 is substantially rectangular in shape, seen in plan view, comprising two frame members 54a extending in a longitudinal direction of the frame 54, and three frame members 54b, 54c, between the two frame members 54a. All three frame members 54b, 54c provide rigidity to the frame 54, but the frame members 54b are arranged at the two outer ends of the frame 54 and the frame member 54c is arranged in between the two outer ends.

At the two outer ends of the frame 54, here as an extension of one of the frame members 54a, ring connectors 54d are provided to interconnect ring sections 52 to form a ring 51 by connecting a ring connector 54d to a corresponding ring connector 54d of an adjacent ring section 52. As the ring 51 is formed by sixteen ring sections, each ring section 52 spans an angle α = 22,5 degrees of the ring 51 as shown in Fig. 10.

In this embodiment, the supports 56 are arranged in the middle of frame members 54a and each include two rollers 56a, 56b and two guide elements 57. The two rollers 56a, 56b are configured to moveably support the inner rail ring 51a or the outer rail ring 51b to allow the rail rings 51a, 51b to rotate about a centre 53 of the ring 51. The guide elements 57 are provided to receive a rail ring 51a, 51b in between to limit radial movement of the rail ring 51a and 51b which will aid in maintaining a circular shape of the modular spool storage device 10.

The position of the supports 56 in the middle of the frame members 54a may provide the advantage that the supports 56 are always in the right position independent of the number of ring sections 52 used to form ring 51.

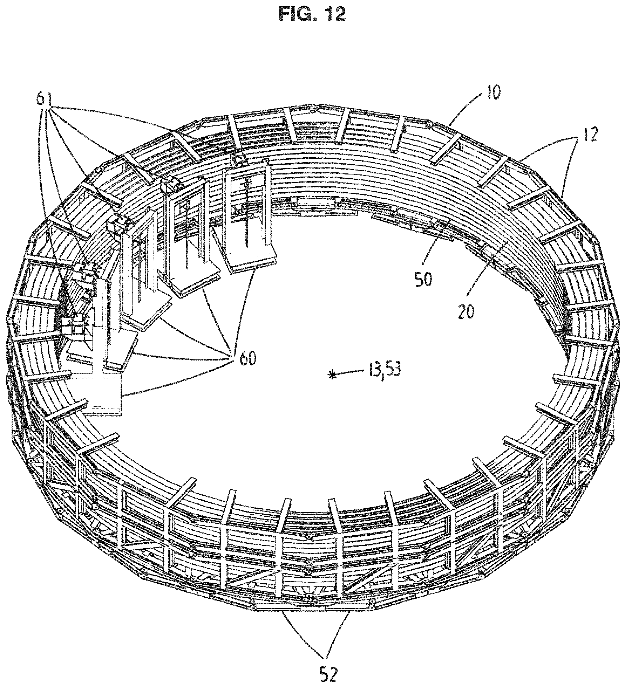

When the diameter of the ring 11 of the modular spool storage device 10 and the ring 51 of the modular support structure are matched to each other, in this case by using the same number of ring sections, because the ring sections have a similar length, the spool storage device 10 can rotatably be supported by the support structure as shown in Fig. 12.

The spool storage device 10 in Fig. 12 is depicted while storing a spool 20, which may be a length of line, e.g. a cable, rigid or flexible pipeline, umbilicals or the like. Fig. 12 depicts the spool storage device 10 in a first assembled operational configuration in which the openings 17 of the ring sections 12 face towards a centre 13 of the ring 11 thereby arranging the spool 20 on the inside of the outer side wall 14 and no back tension is required to keep the spool 20 in the spool storage device 10. However, this means that the length of line 20 can only be unwound via the openings 17 at the inner side of the ring 11.

Fig. 12 depicts five spooling devices 60 arranged on an inside of the spool storage device 10. Each spooling device 60 has a guide member 61, e.g. including rollers, that can be set at different height levels to guide a line portion. Together, the spooling devices 60 define a spooling trajectory that may be adjustable to the spool 20. Having a plurality of spooling devices has the advantage that one of the spooling device may be opened, e.g. to allow an end connector to pass the spooling device while the line may be guided by one or more other spooling devices and may be closed after passing of the end connector to engage with the line again. In this embodiment, the line is guided away over the spool storage device 10.

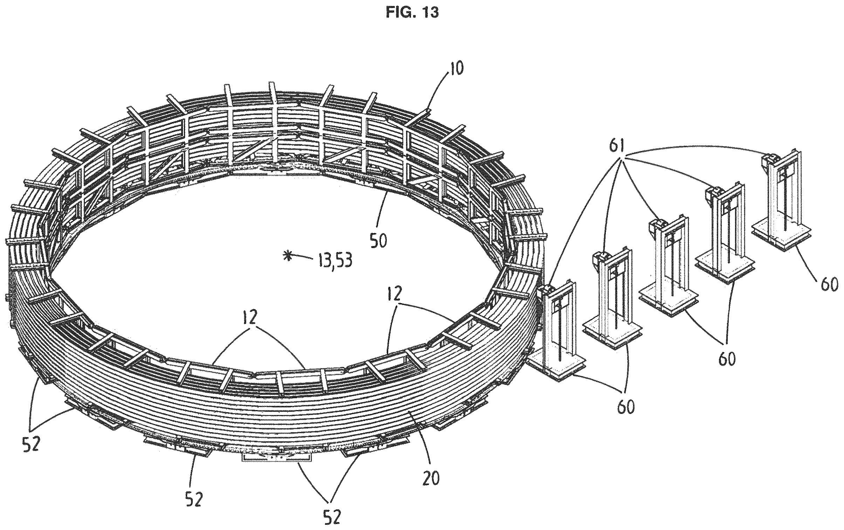

An advantage of the spool storage device 10 and the support structure 50 according to the embodiment of Fig. 12 is that it is also possible to have a second assembled operational configuration as shown in Fig. 13 in which the openings 17 of the ring sections 12 face away from a centre 13 of the ring 11. Hence, the ring sections 12 are connected to each other with the openings 17 facing outwards. The same applies to the ring sections 52 of the ring 51 of the support structure 50. In Fig. 10, the ring connectors 54d are arranged on the outside of the ring 51, while in the configuration of Fig. 13, the ring connectors 54d are arranged on the inside of the support structure 50. As the openings 17 face outwards, the spool 20 can be unwound at the outside, so that the spooling device 60 can now be arranged next to the spool storage device 10.

A difference between the first and second assembled operational configurations is the diameter of the rings. In the second assembled operational configuration, this diameter is larger. Further, the number of ring sections may be varied to form a respective ring also resulting in different diameters of the rings. The rail sections, whether they are provided as part of the support structure or as part of the spool storage reel, will usually have a fixed radius of curvature, so that they may only be usable for a limited range of diameters of the ring. Hence, rail sections having different radii of curvature may be provided or chosen to match different diameters of the ring. In an embodiment, it may be possible that an outer rail ring in the first assembled operational configuration may be used as inner rail ring in the second assembled operational configuration of either the spool storage device or the support structure.

## Claims

1. Modular spool storage device (10) configured to store a length of line (20), e.g. cable, rigid or flexible pipeline, umbilicals or the like, having a capacity of at least 10 mt (10 t), which is configurable between an assembled operational configuration and a disassembled transport configuration,
**characterized in that** in the assembled operational configuration the device (10) includes a ring (11) with a U-shaped cross-section such that an opening (17) of the U-shaped cross-section faces towards a centre (13) of the ring (11) to receive the length of line (20),
wherein the ring (11) comprises multiple ring sections (12), each ring section (12) comprising an outer side wall (14) and a top wall (15) and a bottom wall (16) both extending inwardly from the outer side wall (14),
wherein each ring section (12) has two end faces (18,19) with the outer side wall (14), the top wall (15) and the bottom wall (16) extending in between the two end faces (18,19), each end face (18,19) being provided with at least one ring connector (21,22,23) allowing the assembly of the ring (11) by interconnection of the ring connectors (21,22,23) of the multiple ring sections (12) in circumferential direction from the disassembled transport configuration to the assembled operational configuration,
and wherein the dimensions of a ring section (12) fit into or correspond to that of an ISO shipping container so as to be transportable as or by an ISO shipping container.

2. Device (10) according to claim 1, wherein each ring section (12) is substantially rectangularly shaped, so that the ring sections (12) in the assembled operational configuration form a regular polygon shaped ring,
preferably wherein the ring sections (12) have dimensions that fit into or correspond to that of a 20 feet ISO shipping container.

3. Device (10) according to claim 1 or 2, wherein each end face (18,19) comprises one or more ring connectors (21,22,23) at or near the outer side wall (14) to be interconnected indirectly with the corresponding one or more ring connectors (21,22,23) of an adjacent ring section (12) via one or more corresponding spacers (24), preferably wherein the one or more spacers (24) are moveable relative to the ring section (12) between an operational position connecting two ring sections (12) together and a transport position thereby allowing the ring section (12) including spacer (24) to have dimensions to fit into or correspond to that of an ISO shipping container.

4. Device (10) according to any of claims 1-3, wherein the ring (11) includes at least five ring sections (12), preferably at least nine ring sections (12).

5. Device (10) according to any of claims 1-4, wherein each ring section (12) includes a first portion with the top wall (15) and a part (14t) of the side wall (14) and a second portion with the bottom wall (16) and another part (14b) of the side wall (14), wherein the first portion and the second portion have an operational configuration in which they are connected to each other to form the U-shaped cross-section, and a transport configuration in which they are connected to each other to have dimensions that fit into or correspond to that of an ISO shipping container.

6. Device (10) according to any of the claims 1-5, wherein the bottom wall (16) is provided with at least one rail section (55) to engage with a modular support structure (50), preferably wherein two rail sections (55) are provided, one rail section (55) being arranged at a side wall side of the bottom wall (16), and the other rail section (55) being arranged at a free end side of the bottom wall (16).

7. Device (10) according to any of the claims 1-6, wherein the assembled operational configuration with the opening (17) of the U-shaped cross-section facing towards a centre (13) of the ring (11) is a first assembled operational configuration, and wherein the device (10) is also configurable to a second assembled operational configuration in which the device (10) includes a ring (11) with the opening (17) of the U-shaped cross-section facing away from the centre (13) of the ring (11) to receive the length of line (20).

8. A modular support structure (50) for supporting a spool storage device (10) configured to store a length of line (20), e.g. a cable, rigid or flexible pipeline, umbilicals or the like, having a capacity of at least 10 mt (10 t), wherein the device (10) includes a ring (11) with a U-shaped cross-section such that an opening (17) of the U-shaped cross-section faces towards a centre (13) of the ring (11), said support structure (50) being configurable between an assembled operational configuration to support the device (10) in a substantially horizontal orientation and a disassembled transport configuration,
**characterized in that** in the assembled operational configuration the support structure (50) includes a ring (51) with multiple ring sections (52), each ring section (52) comprising a frame (54) and at least two rail supports (56),
wherein the frames (54) of each ring section (52) have two outer ends, each outer end being provided with at least one ring connector (54d,54e) allowing the assembly of the ring (51) by interconnection of the ring connectors (54d,54e) of the multiple ring sections (52) in circumferential direction from the disassembled transport configuration to the assembled operational configuration,
and wherein the dimensions of a ring section (52) fit into or correspond to that of an ISO shipping container so as to be transportable as or by an ISO shipping container,
preferably wherein each ring section (52) is substantially rectangularly shaped, so that the ring sections (52) in the assembled operational configuration form a regular polygon shaped ring.

9. A support structure according to claim 8, wherein each ring section (52) comprises a rail section (55) having a radius (R1) of curvature corresponding to the ring (52), wherein the at least two rail supports (56) are configured to support the rail section (55) such that the rail section (55) horizontally seen can only move in a circumferential direction, and wherein the rail sections (55) have an upper surface to support the spool storage device (10),
preferably wherein the support structure (50) is provided with a drive to drive rotation of the rail sections (55) in the assembled operational configuration about the centre (53) of the ring (51).

10. A support structure (50) according to claim 8 or 9, wherein each outer end comprises a ring connector (54d,54e) at or near an outer side of the ring section (52) to be interconnected indirectly with a corresponding ring connector (54d,54e) of an adjacent ring section (52) via a spacer (54f), preferably wherein the spacer (54f) is moveable relative to the ring section (52) between an operational position connecting two ring sections (52) together and a transport position thereby allowing the ring section including spacer (54f) to have dimensions to fit into or correspond to that of an ISO shipping container.

11. A support structure (50) according to any of the claims 8-10, wherein the support structure (50) includes a guide (30) to guide a line from inside the ring (51) to outside the ring (51) in the assembled operational configuration, preferably wherein the guide is arranged between the frame (54) and rail section (55) of a ring section (52).

12. A support structure (50) according to any of claims 8-11, wherein one ring connector (54d,54e) is provided at each outer end of the frame (54) of a ring section (52), said one ring connector (54d,54e) being arranged at one side of the outer end, said side being an outer side of the ring section (52) in the assembled operational configuration, preferably wherein the assembled operational configuration with the ring connector (54d,54e) being arranged at an outer side of the ring section (52) is a first assembled operational configuration, and wherein the support structure (50) has a second assembled operational configuration with the ring connector (54d,54e) being arranged at an inner side of the ring section (52) resulting in a larger diameter of the ring (51) than in the first assembled operational configuration.

13. A combination of:
- a modular spool storage device (10) according to any of the claims 1-7;
- a modular support structure (50) according to any of the claims 8-12; and
- a plurality of rail sections (55) in between the modular spool storage device (10) and modular support structure (50), said rail sections (55) having a radius (R1) of curvature corresponding to the ring (52) of the modular support structure (50),
wherein the at least two rail supports (56) of the ring sections (52) of the modular support structure (50) are configured to support the rail sections (55) such that the rail sections (55) horizontally seen can only move in a circumferential direction,
and wherein the rail sections (55) have an upper surface to support the modular spool storage device (10).

14. The combination according to claim 13, further including one or more spooling devices (60) to unwound a length of line (20) from the modular spool storage device (10), preferably wherein the one or more spooling devices (60) include a guide member (61) that can be set at different height levels to guide a line portion.

15. A method for using a modular spool storage device (10) according to any of the claims 1-7, wherein the method comprises the following steps:
a. transporting the ring sections (12) of the spool storage device (10) in the disassembled transport configuration as and/or by ISO shipping container to a location;
b. assembling the spool storage device (10) from the disassembled transport configuration to the assembled operational configuration;
c. spooling a length of line (20) in the spool storage device (10); and
d. transporting the spool storage device (10) including length of line (12) to another location.

## Patentansprüche

1. Modulare Spulenlagerungseinrichtung (10), die ausgestaltet ist, um eine Länge einer Leitung (20), z.B. eines Kabels, einer starren oder flexiblen Rohrleitung, Versorgungskabeln oder ähnlichem, mit einer Kapazität von mindestens 10 mt (10 t) zu lagern, und die zwischen einer montierten Betriebskonfiguration und einer demontierten Transportkonfiguration konfigurierbar ist,
**dadurch gekennzeichnet, dass** die Einrichtung (10) in der montierten Betriebskonfiguration einen Ring (11) mit einem U-förmigen Querschnitt aufweist, so dass eine Öffnung (17) des U-förmigen Querschnitts einer Mitte (13) des Rings (11) zugewandt ist, um die Länge der Leitung (20) aufzunehmen, wobei der Ring (11) mehrere Ringabschnitte (12) umfasst, wobei jeder Ringabschnitt (12) eine äußere Seitenwand (14) sowie eine obere Wand (15) und eine untere Wand (16), die sich beide von der äußeren Seitenwand (14) nach innen erstrecken, umfasst, wobei jeder Ringabschnitt (12) zwei Endflächen (18, 19) aufweist, wobei sich die äußere Seitenwand (14), die obere Wand (15) und die untere Wand (16) zwischen den beiden Endflächen (18, 19) erstrecken, wobei jede Endfläche (18, 19) mit mindestens einem Ringverbinder (21, 22, 23) versehen ist, der die Montage des Rings (11) durch Zusammenschalten der Ringverbinder (21, 22, 23) der mehreren Ringabschnitte (12) in Umfangsrichtung von der demontierten Transportkonfiguration zu der montierten Betriebskonfiguration ermöglicht,
und wobei die Abmessungen eines Ringabschnitts (12) in einen ISO-Schiffscontainer passen oder diesem entsprechen, um als oder durch einen ISO-Versandcontainer transportierbar zu sein.

2. Einrichtung (10) nach Anspruch 1, wobei jeder Ringabschnitt (12) im Wesentlichen rechteckig geformt ist, so dass die Ringabschnitte (12) in der montierten Betriebskonfiguration einen regelmäßigen polygonförmigen Ring bilden,
wobei die Ringabschnitte (12) vorzugsweise Abmessungen aufweisen, die in einen 20-Fuß-ISO-Versandcontainer passen oder diesem entsprechen.

3. Einrichtung (10) nach Anspruch 1 oder 2, wobei jede Endfläche (18, 19) einen oder mehrere Ringverbinder (21, 22, 23) an oder nahe der äußeren Seitenwand (14) umfasst, um indirekt mit dem entsprechenden einen oder den entsprechenden mehreren Ringverbindern (21, 22, 23) eines benachbarten Ringabschnitts (12) über einen oder mehrere entsprechende Abstandshalter (24) verbunden zu werden, wobei vorzugsweise der eine oder die mehreren Abstandshalter (24) relativ zu dem Ringabschnitt (12) zwischen einer zwei Ringabschnitte (12) miteinander verbindenden Betriebsposition und einer Transportposition bewegbar sind, wodurch der Ringabschnitt (12) mit dem Abstandshalter (24) Abmessungen aufweist, die in einen ISO-Versandcontainer passen oder denen eines solchen entsprechen.

4. Einrichtung (10) nach einem der Ansprüche 1-3, wobei der Ring (11) mindestens fünf Ringabschnitte (12), vorzugsweise mindestens neun Ringabschnitte (12), aufweist.

5. Einrichtung (10) nach einem der Ansprüche 1-4, wobei jeder Ringabschnitt (12) einen ersten Abschnitt mit der oberen Wand (15) und einem Teil (14t) der Seitenwand (14) und einen zweiten Abschnitt mit der unteren Wand (16) und einem anderen Teil (14b) der Seitenwand (14) aufweist, wobei der erste Abschnitt und der zweite Abschnitt eine Betriebskonfiguration, in der sie miteinander verbunden sind, um den U-förmigen Querschnitt zu bilden, und eine Transportkonfiguration, in der sie miteinander verbunden sind, um Abmessungen zu haben, die in einen ISO-Versandcontainer passen oder denen eines solchen entsprechen, aufweisen.

6. Einrichtung (10) nach einem der Ansprüche 1 bis 5, wobei die untere Wand (16) mit mindestens einem Schienenabschnitt (55) versehen ist, um in Eingriff mit einer modularen Trägerstruktur (50) zu kommen, wobei vorzugsweise zwei Schienenabschnitte (55) vorgesehen sind, wobei ein Schienenabschnitt (55) an einer Seitenwandseite der unteren Wand (16) angeordnet ist und der andere Schienenabschnitt (55) an einer freien Endseite der unteren Wand (16) angeordnet ist.

7. Einrichtung (10) nach einem der Ansprüche 1-6, wobei die montierte Betriebskonfiguration, bei der die Öffnung (17) des U-förmigen Querschnitts zu einer Mitte (13) des Rings (11) weist, eine erste montierte Betriebskonfiguration ist, und wobei die Einrichtung (10) auch in eine zweite montierte Betriebskonfiguration konfigurierbar ist, bei der die Einrichtung (10) einen Ring (11) aufweist, bei dem die Öffnung (17) des U-förmigen Querschnitts von der Mitte (13) des Rings (11) weg weist, um die Länge der Leitung (20) aufzunehmen.

8. Modulare Haltestruktur (50) zum Halten einer Spulenlagerungseinrichtung (10), die ausgestaltet ist, um eine Länge einer Leitung (20), z. B. eines Kabels, einer starren oder flexiblen Rohrleitung, Versorgungskabeln oder ähnlichem, mit einer Kapazität von mindestens 10 mt (10 t) zu lagern,
wobei die Einrichtung (10) einen Ring (11) mit einem U-förmigen Querschnitt aufweist, so dass eine Öffnung (17) des U-förmigen Querschnitts einer Mitte (13) des Rings (11) zugewandt ist, wobei die Haltestruktur (50) zwischen einer montierten Betriebskonfiguration, um die Einrichtung (10) in einer im Wesentlichen horizontalen Ausrichtung zu halten, und einer demontierten Transportkonfiguration konfigurierbar ist,
**dadurch gekennzeichnet, dass** in der montierten Betriebskonfiguration die Haltestruktur (50) einen Ring (51) mit mehreren Ringabschnitten (52) aufweist, wobei jeder Ringabschnitt (52) einen Rahmen (54) und mindestens zwei Schienenhalterungen (56) umfasst,
wobei die Rahmen (54) jedes Ringabschnitts (52) zwei äußere Enden aufweisen, wobei jedes äußere Ende mit mindestens einem Ringverbinder (54d, 54e) versehen ist, der die Montage des Rings (51) durch Zusammenschalten der Ringverbinder (54d, 54e) der mehreren Ringabschnitte (52) in Umfangsrichtung von der demontierten Transportkonfiguration zu der montierten Betriebskonfiguration ermöglicht,
und wobei die Abmessungen eines Ringabschnitts (52) in die Abmessungen eines ISO-Versandcontainers passen oder diesen entsprechen, um als oder durch einen ISO-Versandcontainer transportierbar zu sein,
wobei vorzugsweise jeder Ringabschnitt (52) im Wesentlichen rechteckig geformt ist, so dass die Ringabschnitte (52) in der montierten Betriebskonfiguration einen regelmäßigen polygonförmigen Ring bilden.

9. Haltestruktur nach Anspruch 8, wobei jeder Ringabschnitt (52) einen Schienenabschnitt (55) mit einem dem Ring (52) entsprechenden Krümmungsradius (R1) umfasst, wobei die mindestens zwei Schienenhalterungen (56) ausgestaltet sind, um den Schienenabschnitt (55) zu halten, so dass sich der Schienenabschnitt (55) horizontal gesehen nur in einer Umfangsrichtung bewegen kann, und wobei die Schienenabschnitte (55) eine Oberseite zum Halten der Spulenlagerungseinrichtung (10) aufweisen,
wobei die Haltestruktur (50) vorzugsweise mit einem Antrieb versehen ist, um die Schienenabschnitte (55) in der montierten Betriebskonfiguration um die Mitte (53) des Rings (51) zu drehen.

10. Haltestruktur (50) nach Anspruch 8 oder 9, wobei jedes äußere Ende einen Ringverbinder (54d, 54e) an oder in der Nähe einer Außenseite des Ringabschnitts (52) umfasst, um indirekt mit einem entsprechenden Ringverbinder (54d, 54e) eines benachbarten Ringabschnitts (52) über einen Abstandshalter (54f) verbunden zu werden, wobei der Abstandshalter (54f) vorzugsweise relativ zu dem Ringabschnitt (52) zwischen einer zwei Ringabschnitte (52) miteinander verbindenden Betriebsposition und einer Transportposition bewegbar ist, wodurch der Ringabschnitt mit dem Abstandshalter (54f) Abmessungen aufweist, die in einen ISO-Versandcontainer passen oder diesem entsprechen.

11. Haltestruktur (50) nach einem der Ansprüche 8-10, wobei die Haltestruktur (50) eine Führung (30) aufweist, um eine Leitung von der Innenseite des Rings (51) zu der Außenseite des Rings (51) in der montierten Betriebskonfiguration zu führen, wobei die Führung vorzugsweise zwischen dem Rahmen (54) und dem Schienenabschnitt (55) eines Ringabschnitts (52) angeordnet ist.

12. Haltestruktur (50) nach einem der Ansprüche 8-11, wobei ein Ringverbinder (54d, 54e) an jedem äußeren Ende des Rahmens (54) eines Ringabschnitts (52) vorgesehen ist, wobei der eine Ringverbinder (54d, 54e) an einer Seite des äußeren Endes angeordnet ist, wobei die Seite eine Außenseite des Ringabschnitts (52) in der montierten Betriebskonfiguration ist, wobei vorzugsweise die montierte Betriebskonfiguration, in der der Ringverbinder (54d, 54e) an einer Außenseite des Ringabschnitts (52) angeordnet ist, eine erste montierte Betriebskonfiguration ist, und
wobei die Haltestruktur (50) eine zweite montierte Betriebskonfiguration aufweist, bei der der Ringverbinder (54d, 54e) an einer Innenseite des Ringabschnitts (52) angeordnet ist, was zu einem größeren Durchmesser des Rings (51) als in der ersten montierten Betriebskonfiguration führt.

13. Kombination aus:
einer modularen Spulenlagerungseinrichtung (10) nach einem der Ansprüche 1-7; einer modularen Haltestruktur (50) nach einem der Ansprüche 8-12; und
einer Vielzahl von Schienenabschnitten (55) zwischen der modularen Spulenlagerungseinrichtung (10) und der modularen Haltestruktur (50), wobei die Schienenabschnitte (55) einen Krümmungsradius (R1) aufweisen, der dem Ring (52) der modularen Haltestruktur (50) entspricht, wobei die mindestens zwei Schienenhalterungen (56) der Ringabschnitte (52) der modularen Haltestruktur (50) ausgestaltet sind, um die Schienenabschnitte (55) zu halten, so dass sich die Schienenabschnitte (55) horizontal gesehen nur in einer Umfangsrichtung bewegen können,
und wobei die Schienenabschnitte (55) eine Oberseite aufweisen, um die modulare Spulenlagerungseinrichtung (10) zu halten.

14. Kombination nach Anspruch 13, die darüber hinaus eine oder mehrere Spuleneinrichtungen (60) aufweist, um eine Länge einer Leitung (20) von der modularen Spulenlagerungseinrichtung (10) abzuwickeln, wobei die eine oder die mehreren Spuleneinrichtungen (60) vorzugsweise ein Führungselement (61) aufweisen, das auf verschiedene Höhenstufen eingestellt werden kann, um einen Leitungsabschnitt zu führen.

15. Verfahren zur Verwendung einer modularen Spulenlagerungseinrichtung (10) nach einem der Ansprüche 1-7, wobei das Verfahren folgende Schritte umfasst:
a. Transportieren der Ringabschnitte (12) der Spulenlagerungseinrichtung (10) in der demontierten Transportkonfiguration als und/oder per ISO-Versandcontainer an einen Ort;
b. Montieren der Spulenlagerungseinrichtung (10) von der demontierten Transportkonfiguration zu der montierten Betriebskonfiguration;
c. Aufspulen einer Länge einer Leitung (20) in der Spulenlagerungseinrichtung (10); und
d. Transportieren der Spulenlagerungseinrichtung (10) einschließlich des Leitungsabschnitts (12) zu einem anderen Ort.

## Revendications

1. Dispositif de stockage de bobine modulaire (10) configuré pour stocker une longueur de ligne (20), par exemple un câble, une conduite rigide ou flexible, des câbles ombilicaux ou similaires, ayant une capacité d'au moins 10 mt (10 t), qui est configurable entre une configuration opérationnelle assemblée et une configuration de transport démontée,
**caractérisé en ce que** dans la configuration opérationnelle assemblée, le dispositif (10) comprend un anneau (11) avec une section transversale en forme de U de sorte qu'une ouverture (17) de la section transversale en forme de U est orientée vers un centre (13) de l'anneau (11) afin de recevoir la longueur de ligne (20),
dans lequel l'anneau (11) comprend plusieurs sections d'anneau (12), chaque section d'anneau (12) comprenant une paroi latérale externe (14) et une paroi supérieure (15) et une paroi inférieure (16) s'étendant toutes deux vers l'intérieur à partir de la paroi latérale externe (14),
dans lequel chaque section d'anneau (12) a deux faces d'extrémité (18, 19) avec la paroi latérale externe (14), la paroi supérieure (15) et la paroi inférieure (16) s'étendant entre les deux faces d'extrémité (18, 19), chaque face d'extrémité (18, 19) étant prévue avec au moins un connecteur d'anneau (21, 22, 23) permettant l'assemblage de l'anneau (11) par l'interconnexion des connecteurs d'anneau (21, 22, 23) de la pluralité de sections d'anneau (12) dans la direction circonférentielle, de la configuration de transport démontée à la configuration opérationnelle assemblée,
et dans lequel les dimensions d'une section d'anneau (12) s'adaptent dans ou correspondent à celles d'un conteneur de transport ISO afin d'être transportable en tant que ou par un conteneur de transport ISO.

2. Dispositif (10) selon la revendication 1, dans lequel chaque section d'anneau (12) est de forme sensiblement rectangulaire, de sorte que les sections d'anneau (12), dans la configuration opérationnelle assemblée, forment un anneau en forme de polygone régulier,
de préférence dans lequel les sections d'anneau (12) ont des dimensions qui s'adaptent dans ou correspondent à celles d'un conteneur de transport ISO de 20 pieds.

3. Dispositif (10) selon la revendication 1 ou 2, dans lequel chaque face d'extrémité (18, 19) comprend un ou plusieurs connecteurs d'anneau (21, 22, 23) au niveau de ou à proximité de la paroi latérale externe (14) destinée à être interconnectée indirectement avec les un ou plusieurs connecteurs d'anneau (21, 22, 23) correspondants d'une section d'anneau (12) adjacente via un ou plusieurs dispositifs d'espacement (24) correspondants, de préférence dans lequel les un ou plusieurs dispositifs d'espacement (24) sont mobiles par rapport à la section d'anneau (12) entre une position opérationnelle raccordant deux sections d'anneau (12) ensemble et une position de transport permettant ainsi à la section d'anneau (12) comprenant le dispositif d'espacement (24) d'avoir des dimensions qui s'adaptent dans ou correspondent à celles d'un conteneur de transport ISO.

4. Dispositif (10) selon l'une quelconque des revendications 1 à 3, dans lequel l'anneau (11) comprend au moins cinq sections d'anneau (12), de préférence au moins neuf sections d'anneau (12).

5. Dispositif (10) selon l'une quelconque des revendications 1 à 4, dans lequel chaque section d'anneau (12) comprend une première partie avec la paroi supérieure (15) et une partie (14t) de la paroi latérale (14) et une seconde partie avec la paroi inférieure (16) et une autre partie (14b) de la paroi latérale (14), dans lequel la première partie et la seconde partie ont une configuration opérationnelle dans laquelle elles sont raccordées entre elles afin de former la section transversale en forme de U, et une configuration de transport dans laquelle elles sont raccordées entre elles pour avoir des dimensions qui s'adaptent dans ou correspondent à celles d'un conteneur de transport ISO.

6. Dispositif (10) selon l'une quelconque des revendications 1 à 5, dans lequel la paroi inférieure (16) est prévue avec au moins une section de rail (55) pour se mettre en prise avec une structure de support modulaire (50), de préférence dans lequel deux sections de rail (55) sont prévues, une section de rail (55) étant agencée au niveau d'un côté de paroi latérale de la paroi inférieure (16), et l'autre section de rail (55) étant agencée au niveau d'un côté d'extrémité libre de la paroi inférieure (16).

7. Dispositif (10) selon l'une quelconque des revendications 1 à 6, dans lequel la configuration opérationnelle assemblée avec l'ouverture (17) de la section transversale en forme de U qui est orientée vers un centre (13) de l'anneau (11), est une première configuration opérationnelle assemblée, et dans lequel le dispositif (10) est également configurable dans une seconde configuration opérationnelle assemblée dans laquelle le dispositif (10) comprend un anneau (11) avec l'ouverture (17) de la section transversale en forme de U orientée à l'opposé du centre (13) de l'anneau (11) afin de recevoir la longueur de ligne (20).

8. Structure de support modulaire (50) pour supporter un dispositif de stockage de bobine (10) configuré pour stocker une longueur de ligne (20), par exemple un câble, une conduite rigide ou flexible, des câbles ombilicaux ou similaires, ayant une capacité d'au moins 10 mt (10 t), dans laquelle le dispositif (10) comprend un anneau (11) avec une section transversale en forme de U de sorte qu'une ouverture (17) de la section transversale en forme de U est orientée vers un centre (13) de l'anneau (11), ladite structure de support (50) étant configurable entre une configuration opérationnelle assemblée pour supporter le dispositif (10) dans une orientation sensiblement horizontale et une configuration de transport démontée,
**caractérisée en ce que** dans la configuration opérationnelle assemblée, la structure de support (50) comprend un anneau (51) avec plusieurs sections d'anneau (52), chaque section d'anneau (52) comprenant un bâti (54) et au moins deux supports de rail (56),
dans laquelle les bâtis (54) de chaque section d'anneau (52) ont deux extrémités externes, chaque extrémité externe étant prévue avec au moins un connecteur d'anneau (54d, 54e) permettant l'assemblage de l'anneau (51) par l'interconnexion des connecteurs d'anneau (54d, 54e) de la pluralité de sections d'anneau (52) dans la direction circonférentielle, de la configuration de transport démontée à la configuration opérationnelle assemblée,
et dans laquelle les dimensions d'une section d'anneau (52) s'adaptent dans ou correspondent à celles d'un conteneur de transport ISO afin d'être transportable en tant que ou par un conteneur de transport ISO, de préférence dans laquelle chaque section d'anneau (52) a une forme sensiblement rectangulaire, de sorte que les sections d'anneau (52) dans la configuration opérationnelle assemblée forment un anneau en forme de polygone régulier.

9. Structure de support selon la revendication 8, dans laquelle chaque section d'anneau (52) comprend une section de rail (55) ayant un rayon (R1) de courbure correspondant à l'anneau (52), dans laquelle les au moins deux supports de rail (56) sont configurés pour supporter la section de rail (55) de sorte que la section de rail (55), observée horizontalement, peut uniquement se déplacer dans une direction circonférentielle, et dans laquelle les sections de rail (55) ont une surface supérieure pour supporter le dispositif de stockage de bobine (10), de préférence dans laquelle la structure de support (50) est prévue avec un entraînement pour entraîner la rotation des sections de rail (55) dans la configuration opérationnelle assemblée autour du centre (53) de l'anneau (51).

10. Structure de support (50) selon la revendication 8 ou 9, dans laquelle chaque extrémité externe comprend un connecteur d'anneau (54d, 54e) au niveau de ou à proximité d'un côté externe de la section d'anneau (52) destinée à être interconnectée indirectement avec un connecteur d'anneau (54d, 54e) correspondant d'une section d'anneau (52) adjacente via un dispositif d'espacement (54f), de préférence dans laquelle le dispositif d'espacement (54f) est mobile par rapport à la section d'anneau (52) entre une position opérationnelle raccordant deux sections d'anneau (52) ensemble et une position de transport, permettant ainsi à la section d'anneau comprenant le dispositif d'espacement (54f) d'avoir des dimensions pour s'adapter dans ou correspondre à celles d'un conteneur de transport ISO.

11. Structure de support (50) selon l'une quelconque des revendications 8 à 10, dans laquelle la structure de support (50) comprend un guide (30) pour guider une ligne depuis l'intérieur de l'anneau (51) à l'extérieur de l'anneau (51) dans la configuration opérationnelle assemblée, de préférence dans laquelle le guide est agencé entre le bâti (54) et la section de rail (55) d'une section d'anneau (52).

12. Structure de support (50) selon l'une quelconque des revendications 8 à 11, dans laquelle un connecteur d'anneau (54d, 54e) est prévu au niveau de chaque extrémité externe du bâti (54) d'une section d'anneau (52), ledit un connecteur d'anneau (54d, 54e) étant agencé au niveau d'un côté de l'extrémité externe, ledit côté étant un côté externe de la section d'anneau (52) dans la configuration opérationnelle assemblée, de préférence dans laquelle la configuration opérationnelle assemblée avec le connecteur d'anneau (54d, 54e) qui est agencée au niveau d'un côté externe de la section d'anneau (52), est une première configuration opérationnelle assemblée, et dans laquelle la structure de support (50) a une seconde configuration opérationnelle assemblée avec le connecteur d'anneau (54d, 54e) qui est agencé au niveau d'un côté interne de la section d'anneau (52) se traduisant par un plus grand diamètre de l'anneau (51) que dans la première configuration opérationnelle assemblée.

13. Combinaison composée de :
un dispositif de stockage de bobine modulaire (10) selon l'une quelconque des revendications 1 à 7 ;
une structure de support modulaire (50) selon l'une quelconque des revendications 8 à 12 ; et
une pluralité de sections de rail (55) entre le dispositif de stockage de bobine modulaire (10) et la structure de support modulaire (50), lesdites sections de rail (55) ayant un rayon (R1) de courbure correspondant à l'anneau (52) de la structure de support modulaire (50),
dans laquelle les au moins deux supports de rail (56) des sections d'anneau (52) de la structure de support modulaire (50) sont configurés afin de supporter les sections de rail (55) de sorte que les sections de rail (55), observées horizontalement, peuvent uniquement se déplacer dans une direction circonférentielle,
et dans laquelle les sections de rail (55) ont une surface supérieure pour supporter le dispositif de stockage de bobine modulaire (10).

14. Combinaison selon la revendication 13, comprenant en outre un ou plusieurs dispositifs de bobinage (60) afin de dérouler une longueur de ligne (20) du dispositif de stockage de bobine modulaire (10), de préférence dans laquelle les un ou plusieurs dispositifs de bobinage (60) comprennent un élément de guidage (61) qui peut être placé à différents niveaux de hauteur pour guider une partie de ligne.

15. Procédé pour utiliser un dispositif de stockage de bobine modulaire (10) selon l'une quelconque des revendications 1 à 7, dans lequel le procédé comprend les étapes suivantes consistant à :
a. transporter les sections d'anneau (12) du dispositif de stockage de bobine (10) dans la configuration de transport démontée en tant que et/ou par un conteneur de transport ISO jusqu'à un emplacement ;
b. assembler le dispositif de stockage de bobine (10) de la configuration de transport démontée à la configuration opérationnelle assemblée ;
c. embobiner une longueur de ligne (20) dans le dispositif de stockage de bobine (10) ; et
d. transporter le dispositif de stockage de bobine (10) comprenant la longueur de ligne (12) vers un autre emplacement.
